Europäisches Patentamt

European Patent Office

Office européen des brevets

(19)

(11) **EP 1 160 515 B1**

(12) **EUROPÄISCHE PATENTSCHRIFT**

(45) Veröffentlichungstag und Bekanntmachung des
Hinweises auf die Patenterteilung:
**06.04.2005   Patentblatt 2005/14**

(51) Int Cl.$^7$: **F24D 19/10**

(21) Anmeldenummer: **01106999.4**

(22) Anmeldetag: **21.03.2001**

(54) **Heizungsanlage mit mindestens zwei Heizkreisen**

Heating installation with at least two heating circuits

Installation de chauffage avec au moins deux circuits de chauffage

(84) Benannte Vertragsstaaten:
**DE FR GB IT NL**

(30) Priorität: **03.06.2000   DE 10027656**

(43) Veröffentlichungstag der Anmeldung:
**05.12.2001   Patentblatt 2001/49**

(73) Patentinhaber: **ROBERT BOSCH GMBH**
**70442 Stuttgart (DE)**

(72) Erfinder:
• **Kroell, Ulrich**
  **72654 Neckartenzlingen (DE)**
• **Schmuker, Franz**
  **73117 Wangen (DE)**

(56) Entgegenhaltungen:
EP-A- 0 816 766          DE-A- 4 004 391
DE-A- 4 041 183          DE-A- 4 312 808

**Beschreibung**

Die Erfindung geht aus von einer Heizungsanlage mit mindestens zwei Heizkreisen nach dem Oberbegriff des Anspruchs 1, wie sie beispielsweise aus DE-A-4 004 391, DE-A-4 312 808 oder EP-A-0 816 766 bekannt sind.

Stand der Technik

Heizungsanlagen die mit Brennwertgeräten betrieben werden, benötigen zur Erreichung ihres gewünschten Wirkungsgrades eine geringe Rücklauftemperatur von ≤ 48 °C. Probleme bereitet das Halten der Rücklauftemperatur auf diesen Wert, wenn mehr als ein Heizkreis an die Heizungsanlage angeschlossen ist und jeder Heizkreis eine eigene Heizkreispumpe besitzt, die unabhängig von der Heizgerätepumpe einstellbar sind. Damit die Umwälzpumpen sich nicht gegenseitig beeinflussen, ist es bekannt, zwischen den Heizkreisen und dem Heizgerätekreis eine hydraulische Weiche zu installieren. Diese Maßnahme erfordert neben den Kosten für die hydraulische Weiche erheblichen Installationsaufwand.

Vorteile der Erfindung

Die erfindungsgemäße Heizungsanlage mit den kennzeichnenden Maßnahmen hat den Vorteil, daß eine einfache und kostengünstige Lösung für ein Umlaufwasserheizgerät mit mehreren Heizkreisen ohne Funktionseinbußen unter Verwendung eines Brennwertgerätes möglich ist. Rückwirkungen der Umwälzpumpen der Heizkreise werden durch eine Anpassung der Heizgerätepumpe ausgeglichen und ausgeregelt, wodurch der Bedarf des elektrischen Stroms zum Betreiben der Pumpen reduziert werden kann. Außerdem wird eine Verbesserung der Funktion des Umlaufwasserheizgerätes erzielt, indem die Mindestumlaufwassermenge ohne zusätzliche Einrichtungen, wie Stellglieder, nur bei Bedarf, daß heißt, bei hoher Heizleistung, hoher Vorlauf- und niedriger Rücklauftemperatur auf die erforderlichen Mengen vorlauftemperaturabhängig eingeregelt werden kann. Hierdurch wird ebenfalls der Strombedarf der Heizgerätepumpe gesenkt.

Vorteilhafte Weiterbildungen der Erfindung sind durch die Maßnahmen der Unteransprüche möglich. Eine technisch einfache Lösung wird erreicht, indem als Meßelement ein Strömungsschalter oder eine in den Heizkreislauf integrierbare Flügelradturbine zum Anzeigen der Strömung eingesetzt wird. Eine weitere Ausführungsform ist durch die Verwendung von Temperaturfühlern möglich, die in der Bypassleitung die Temperatur des Heizwassers erfassen. Zusätzlich kann die Temperatur der Rücklaufleitung kurz vor Eingang in den Wärmeübertrager in die Regelung aufgenommen werden.

Zeichnung

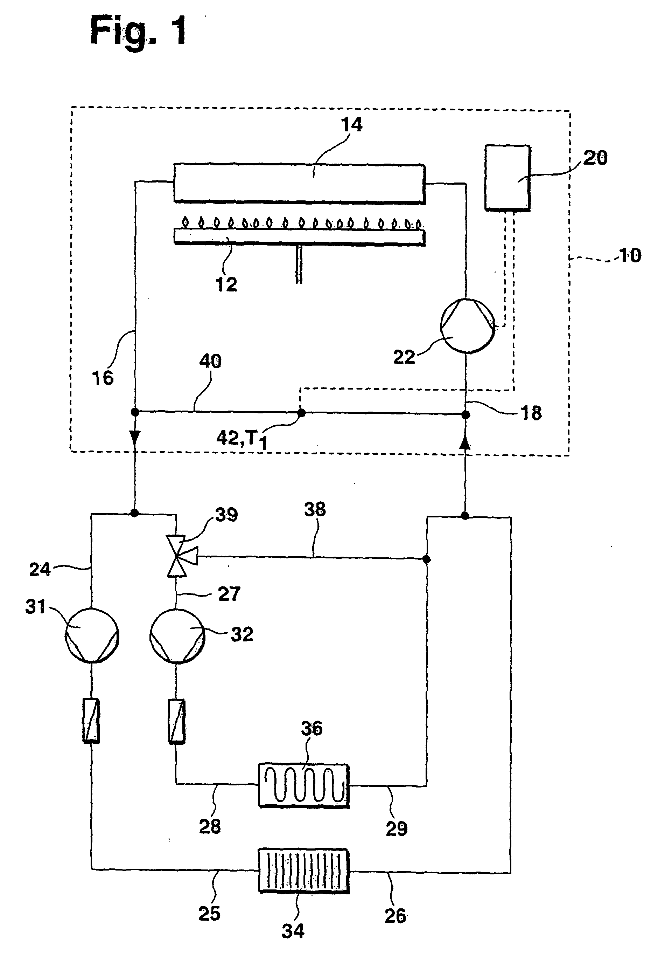

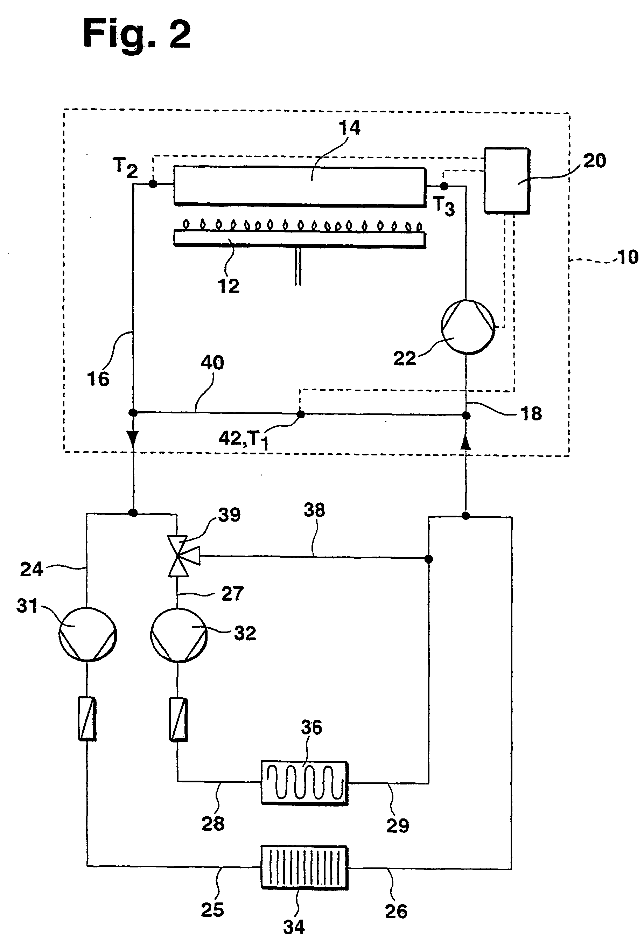

Zwei Ausführungsbeispiele der Erfindung sind in der Zeichnung dargestellt und in der nachfolgenden Beschreibung näher erläutert. Figur 1 zeigt ein hydraulisches Schaltbild einer erfindungsgemäßen Heizungsanlage gemäß einem ersten Ausführungsbeispiel und Figur 2 ein hydraulisches Schaltbild der erfindungsgemäßen Heizungsanlage gemäß einem zweiten Ausführungsbeispiel.

Ausführungsbeispiele

Der in Figur 1 dargestellte hydraulische Schaltplan einer Heizungsanlage zeigt ein Heizgerät 10, beispielsweise ein Brennwertgerät, mit einem Brenner 12, einem Wärmetauscher 14, einer Vorlaufleitung 16, einer Rücklaufleitung 18 und einer Heizgerätepumpe 22. Die Heizgerätepumpe 22 ist im vorliegenden Ausführungsbeispiel in der Rücklaufleitung 18 angeordnet. Ferner ist ein Steuergerät 20 vorgesehen, das unter anderem die Förderleistung der Heizgerätepumpe 22 regelt.

An die Vorlaufleitung 16 und die Rücklaufleitung 18 sind im vorliegenden Ausführungsbeispiel ein erster Heizkreis 24 mit einem ersten Heizkreisvorlauf 25 und einem ersten Heizkreisrücklauf 26 sowie ein weiterer Heizkreis 27 mit einem zweiten Heizkreisvorlauf 28 und einem zweiten Heizkreisrücklauf 29 angeschlossen.

Der erste Heizkreis 24 besitzt eine erste Heizkreispumpe 31 und der zweite Heizkreis 27 eine zweite Heizkreispumpe 32. Der erste Heizkreis 24 ist beispielsweise mit Radiatorheizkörpern 34 ausgestattet. Der zweite Heizkreis 27 versorgt im vorliegenden Ausführungsbeispiel eine Fußbodenheizung 36, die mit einer geringeren Vorlauftemperatur betrieben wird als die Radiatorheizkörper 34. Zu diesem Zwecke ist der zweite Heizkreisrücklauf 29 über eine Mischleitung 38 und einem Dreiwegeventil 39 mit dem zweiten Heizkreisvorlauf 28 verbunden. Über die Mischleitung 38 und das Dreiwegeventil 39 wird das Heizwasser von dem Heizkreisrücklauf 29 mit der geringeren Rücklauftemperatur erneut in den ersten Heizkreisvorlauf 28 eingespeist, so daß die Temperatur des Heizwassers des zweiten Heizkreises 27 auf die erforderliche geringere Temperatur zum Betreiben der Fußbodenheizung 36 abgesenkt wird.

Aufgrund der unterschiedlichen hydraulischen Gegebenheiten des ersten und des zweiten Heizkreises 24, 27 werden die Heizkreispumpen 31, 32 mit unterschiedlichen Förderleistungen betrieben. Darüber hinaus können die Heizkreispumpen 31, 32 entsprechend den Anforderungen an die Heizkreise unabhängig von der Heizgerätepumpe 22 eingestellt werden. Durch die Veränderung der Heizkreiswiderstände, verursacht z.B. durch Thermostatventile, der ersten Heizkreispumpe 31 und der zweiten Heizkreispumpe 32 kommt es zu einem Eingriff in den Regelkreis des Heizgerätes 10, wobei die über die Förderleistung der Heizgerätepumpe 22 eingestellte Differenz zwischen der Temperatur in der Vorlaufleitung 16 (Vorlauftemperatur) und der Temperatur in der Rücklaufleitung 18 (Rücklauftemperatur) ebenso verändert wird.

Um eine bei Brennwertgeräten günstige hohe Temperaturdifferenz zwischen Vorlauf und Rücklauf unabhängig von den Eingriffen in die Heizkreise 24, 27 zu halten, ist zwischen der Vorlaufleitung 16 und der Rücklaufleitung 18 eine Bypassleitung 40 geschaltet, die als Meßleitung dient und durch die Heizwasser strömen kann. In die Bypassleitung 40 ist ein Meßwertaufnehmer 42 integriert, dessen Signal dem Steuergerät 20 zugeführt wird.

Bei dem Ausführungsbeispiel gemäß Figur 1 ist der Meßwertaufnehmer 42 ein Strömungsschalter oder eine Turbine, deren Drehzahl beispielsweise mittels eines Hall-Sensors aufgenommen wird. Mittels des Strömungsschalters bzw. der Turbine wird eine Strömung in der Bypassleitung 40 festgestellt. Die Regelung des Steuergerätes 20 ist dabei so eingestellt, daß die Drehzahl der Heizgerätepumpe 22 derart nachgeführt wird, daß der in der Bypassleitung 40 angeordnete Strömungsschalter bzw. die Turbine keine Strömung detektiert.

Bei dem in Figur 2 dargestellten Ausführungsbeispiel ist als Meßwertaufnehmer 42 ein erster Temperaturfühler T1 in die Bypassleitung 40 integriert, der die Temperatur des Heizwassers in der Bypassleitung 40 erfaßt. In der Vorlaufleitung 16 ist ferner ein zweiter Temperaturfühler T2 und in der Rücklaufleitung 18 ein dritter Temperaturfühler T3 positioniert. Vom Steuergerät 20 wird nun das Meßsignal des Temperaturfühlers T1 mit dem Meßsignal des Temperaturfühlers T2 verglichen. Ein Zustand, bei dem die mit dem Temperaturfühler T1 gemessene Temperatur in der Bypassleitung 40 der Temperatur entspricht, die der Temperaturfühler T2 in der Vorlaufleitung 16 erfaßt, zeigt an, daß über die Bypassleitung 40 das Heizwasser direkt von der Vorlaufleitung 16 in die Rücklaufleitung 18 gezogen wird und daß sich die voreingestellte Temperturdifferenz zwischen Vorlauftemperatur und Rücklauftemperatur verringt. Dieser Zustand weist auf eine zu hohe Förderleistung der Heizgerätepumpe 22 hin. Das Steuergerät 20 veranlaßt, das die Drehzahl bzw. die Förderleitung der Heizgerätepumpe 22 verringert wird.

Ist hingegen die Drehzahl bzw. die Förderleistung der Heizgerätepumpe 22 zu klein, fließt das Heizwasser der Rücklaufleitung 18 über die Bypassleitung 40 in die Vorlaufleitung 16 zurück. In diesem Fall stimmt die Temperatur in der Bypassleitung 40 mit der vom Temperaturfühler T3 gemessenen Vorlauftemperatur überein.

Bei diesem Zustand wird vom Steuergerät 20 die Drehzahl bzw. die Förderleistung der Heizgerätepumpe 22 erhöht.

Wenn zusätzlich zu der Temperaturmessung noch die Temperaturanstiegs- bzw. Abfallgeschwindigkeit erfaßt wird, kann über das Steuergerät 20 eine stabile Drehzahl der Heizgerätepumpe 22 eingestellt werden. Darüber hinaus ist es möglich, die Heizgerätepumpe 22 in der Drehzahl periodisch zu verändern. Bleibt dabei über einen festgelegten Zeitraum, z. B. die vom Temperaturfühler T1 und vom Temperaturfühler T2 gemessene Temperatur gleich, wird die Drehzahl der Heizgerätepumpe 22 gesenkt. Bei Gleichstand der Temperaturen von T1 und T3 erhöht. Dieser Einregelvorgang wird dann periodisch wiederholt.

In einer weiteren Ausführungsform des in Figur 2 dargestellten Ausführungsbeispiels wird auf den in der Rücklaufleitung 18 positionierten Temperaturfühler T3 verzichtet. In diesem Fall ist im Steuergerät 20 ein Rechner integriert, der die Temperatur in der Rücklaufleitung 18 anhand der Temperatur in der Vorlaufleitung 16 errechnet. Dem Rechner werden dabei die festen Größen, wie z. B. Geräteleistung und dynamisches Verhalten des Heizgerätes 10 bei einer Vorlauftemperaturänderung einprogrammiert.

Außerdem eignet sich die Erfindung dazu, bei bestimmten Betriebsbedingungen, wie hohe Heizleistung, hohe Vorlauf- und niedrige Rücklauftemperatur auch eine Mindestumlaufwassermenge zu gewährleisten. Dies wird mit Hilfe der Temperaturfühler T1, T2, T3 und der Kenntnis der Geräteparameter, wie Drehzahl der Heizkreis- und Heizgerätepumpen, so geregelt, daß die für die Gerätefunktion benötigte Mindestumlaufwassermenge durch die Bypassleitung 40 fließt. Dabei gilt: Je höher die Vorlauftemperatur und Heizgeräteleistung, um so größer die Mindestumlaufwassermenge. Als Funktion läßt sich dies folgendermaßen ausdrücken:

$$N = D \cdot c \cdot (T_V - T_R),$$

wobei N die Heizgeräteleistung, D der Durchfluß in der Bypassleitung 40, c die spezifische Wärmekapazität, $T_V$ die Vorlauftemperatur und $T_R$ die Rücklauftemperatur ist.

**Patentansprüche**

1.  Heizungsanlage mit mindestens zwei Heizkreisen sowie mit einem Heizgerät mit einer Heizgerätepumpe, einem Heizungsvorlauf und einem Heizungsrücklauf, wobei zwischen Heizungsvorlauf und Heizungsrücklauf Heizwasser zirkuliert und wobei eine Temperaturdifferenz zwischen der Vorlauftemperatur und der Rücklauftemperatur des Heizwassers einstellbar ist, **dadurch gekennzeichnet, daß** zwischen Heizungsrücklauf (18) und Heizungsvorlauf (16) eine Bypassleitung (40) mit einem Meßwertaufnehmer (42) angeordnet ist und daß die Heizgerätepumpe (22) in . Abhängigkeit vom Meßsignals des Meßwertaufnehmers (42) derart regelbar ist, daß die Temperaturdifferenz zwischen dem Heizungsvorlauf und dem Heizungsrücklauf im wesentlichen gehalten wird.

**2.** Heizungsanlage nach Anspruch 1, **dadurch gekennzeichnet, daß** ein Steuergerät (20) vorgesehen ist, dem das Meßsignal des Meßwertaufnehmers (42) zuführbar ist, und daß das Steuergerät (20) die Drehzahl bzw. die Förderleistung der Heizgerätepumpe (22) derart steuert, daß die Bypassleitung (40) im Wesentlichen strömungsfrei ist.

**3.** Heizungsanlage nach Anspruch 1 oder 2, **dadurch gekennzeichnet, daß** der Meßwertaufnehmer (42) ein Strömungssensor ist, der die Strömung in der Bypassleitung (40) erfaßt.

**4.** Heizungsanlage nach Anspruch 1 oder 2, **dadurch gekennzeichnet, daß** der Meßwertaufnehmer (42) ein Temperaturfühler T1 ist, der die Temperatur des Heizwassers in der Bypassleitung (40) erfaßt, und daß über einen Temperaturvergleich mit der Temperatur in der Vorlaufleitung und/oder Rücklaufleitung eine Strömungsrichtung des Heizwassers in der Bypassleitung (40) feststellbar ist.

**5.** Heizungsanlage nach Anspruch 4, **dadurch gekennzeichnet, daß** vom Steuergerät (20) die Drehzahl bzw. Förderleistung der Heizgerätepumpe (22) derart einstellbar ist, daß die vom Temperaturfühler T1 erfaßte Temperatur des Heizwassers in der Bypassleitung (40) auf einen vorgegebenen Wert gehalten wird.

**6.** Heizungsanlage nach Anspruch 5, **dadurch gekennzeichnet, daß** das Steuergerät (20) eine Steueranordnung enthält, die bewirkt, daß die Drehzahl bzw. die Förderleistung der Heizgerätepumpe (22) verringert wird, wenn der Temperaturfühler T1 die Temperatur des Heizwassers in der Vorlaufleitung (16) erfaßt, und daß die Drehzahl bzw. die Förderleistung der Heizgerätepumpe (22) erhöht wird, wenn der Temperaturfühler T1 die Temperatur des Heizwassers in der Rücklaufleitung (18) erfaßt.

**7.** Heizungsanlage nach Anspruch 6, **dadurch gekennzeichnet, daß** zur Erfassung der Temperatur des Heizwassers in der Vorlaufleitung (16) ein zweiter Temperaturfühler T2 in der Vorlaufleitung (16) und/oder zur Erfassung der Temperatur des Heizwassers in der Rücklaufleitung (18) ein dritter Temperaturfühler T3 in der Rücklaufleitung (18) angeordnet sind.

**8.** Heizungsanlage nach Anspruch 6, **dadurch gekennzeichnet, daß** ein Rechner integriert ist, der die Temperatur in der Rücklaufleitung (18) anhand der Temperatur in der Vorlaufleitung (16) errechnet.

**Claims**

**1.** Heating installation with at least two heating circuits and also with a heating device with a heating device pump, a heating flow and a heating return, heating water circulating between the heating flow and the heating return and it being possible to set a temperature difference between the flow temperature and the return temperature of the heating water, **characterized in that** a bypass line (40) with a measured-value pickup (42) is arranged between the heating return (18) and the heating flow (16) and **in that** the heating device pump (22) can be controlled as a function of the measuring signal of the measured-value pickup (42) in such a way that the temperature difference between the heating flow and the heating return is substantially maintained.

**2.** Heating installation according to Claim 1, **characterized in that** a control device (20) to which the measuring signal of the measured-value pickup (42) can be fed is provided, and **in that** the control device (20) controls the rotational speed or the discharge capacity of the heating device pump (22) in such a way that the bypass line (40) is substantially free from flow.

**3.** Heating installation according to Claim 1 or 2, **characterized in that** the measured-value pickup (42) is a flow sensor, which senses the flow in the bypass line (40).

**4.** Heating installation according to Claim 1 or 2, **characterized in that** the measured-value pickup (42) is a temperature sensor T1, which senses the temperature of the heating water in the bypass line (40), and **in that** a direction of flow of the heating water in the bypass line (40) can be established by means of a temperature comparison with the temperature in the flow line and/or return line.

**5.** Heating installation according to Claim 4, **characterized in that** the rotational speed or discharge capacity of the heating device pump (22) can be set by the control device (20) in such a way that the temperature of the heating water in the bypass line (40) that is sensed by the temperature sensor T1 is maintained at a predetermined value.

**6.** Heating installation according to Claim 5, **characterized in that** the control device (20) includes a control arrangement which has the effect that the rotational speed or the discharge capacity of the heating device pump (22) is reduced when the temperature sensor T1 senses the temperature of the heating water in the flow line (16), and **in that** the rotational speed or the discharge capacity of the heating device pump (22) is increased when the temperature sensor T1 senses the temperature of the heating water in the return line (18).

7. Heating installation according to Claim 6, **characterized in that**, for sensing the temperature of the heating water in the flow line (16), a second temperature sensor T2 is arranged in the flow line (16) and/or, for sensing the temperature of the heating water in the return line (18), a third temperature sensor T3 is arranged in the return line (18).

8. Heating installation according to Claim 6, **characterized in that** a computer which calculates the temperature in the return line (18) on the basis of the temperature in the flow line (16) is integrated.

## Revendications

1. Installation de chauffage comportant au moins deux circuits de chauffage ainsi qu'un appareil de chauffage avec une pompe de chauffage, un circuit aller et un circuit retour dans laquelle de l'eau chaude circule entre le circuit aller et le circuit retour et dans laquelle une différence de température peut être réglée entre la température du circuit aller et la température de retour de l'eau chaude,
   **caractérisée en ce qu'**
   une conduite de dérivation (40) avec un transducteur (42) est disposée entre le circuit retour (18) et le circuit aller (16), et **en ce que** la pompe de chauffage (22) est réglable en fonction du signal de mesure du transducteur (42) de sorte que la différence de température entre le circuit aller et le circuit retour soit essentiellement maintenue.

2. Installation de chauffage selon la revendication 1, **caractérisée en ce qu'**
   on prévoit un appareil de commande (20) auquel peut être amené le signal de mesure du transducteur (42), et l'appareil de commande (20) commande le régime ou le débit de la pompe de chauffage (22) de sorte que la conduite de dérivation (40) ne présente essentiellement pas d'écoulement.

3. Installation de chauffage selon la revendication 1 ou 2,
   **caractérisée en ce que**
   le transducteur (42) est un capteur de flux qui détecte le flux dans la conduite de dérivation (40).

4. Installation de chauffage selon la revendication 1 ou 2,
   **caractérisée en ce que**
   le transducteur (42) est un capteur de température T1 qui détecte la température de l'eau chaude dans la conduite de dérivation (40), et un sens d'écoulement de l'eau chaude peut être déterminé dans la conduite de dérivation (40) en comparant la température dans la conduite aller et/ou celle de la conduite retour.

5. Installation de chauffage selon la revendication 4, **caractérisée en ce que**
   le régime ou le débit de la pompe de chauffage (22) peut être réglé(e) de telle sorte par l'appareil de commande (20) de telle sorte que la température de l'eau chaude dans la conduite de dérivation (40) détectée par le capteur de température T1 est maintenue à une valeur prédéfinie.

6. Installation de chauffage selon la revendication 5, **caractérisée en ce que**
   l'appareil de commande (20) comporte un dispositif de commande qui réduit le régime ou le débit de la pompe de chauffage (22) lorsque le capteur de température T1 détecte la température de l'eau chaude dans la conduite montante (16), et le régime ou le débit de la pompe de chauffage (22) augmente lorsque le capteur de température T1 détecte la température de l'eau chaude dans la conduite de retour (18).

7. Installation de chauffage selon la revendication 6, **caractérisée en ce qu'**
   un deuxième capteur de température T2 est disposé dans la conduite montante (16) pour y détecter la température de l'eau chaude, et /ou un troisième capteur de température T3 est disposé dans la conduite de retour (18) pour y détecter la température de l'eau chaude.

8. Installation de chauffage selon la revendication 6, **caractérisée en ce qu'**
   un ordinateur est intégré pour calculer la température dans la conduite de retour (18) à l'aide de la température dans la conduite montante (16).

# Fig. 1

EP 1 160 515 B1

# Fig. 2

7